# EUROPEAN PATENT SPECIFICATION

(11) **EP 2 564 517 B1**
(45) Date of publication and mention of the grant of the patent: **17.08.2022**
(21) Application number: 11775305.3
(22) Date of filing: 29.04.2011
(51) Int. Cl.: H04B 7/06

(54) **MULTIPLE-INPUT MULTIPLE-OUTPUT COMMUNICATION SYSTEM SUPPORTING MULTIPLE REPORTING MODES**
MIMO-KOMMUNIKATIONSSYSTEM MIT UNTERSTÜTZUNG MEHRERER BERICHTSMODI
SYSTÈME DE COMMUNICATION ENTRÉES MULTIPLES-SORTIES MULTIPLES ASSISTANT DES MODES MULTIPLES DE COMPTE RENDU

(30) Priority: 17.02.2011 KR 20110014052; 21.06.2010 US 356768 P; 17.06.2010 US 355681 P; 30.04.2010 US 329634 P
(43) Date of publication of application: 06.03.2013
(73) Proprietor: Samsung Electronics Co., Ltd., Suwon-si, Gyeonggi-do 443-742 (KR)
(72) Inventor: CHOI, Jun Il, Seoul 137-069 (KR); CLERCKX, Bruno, Seoul 137-070 (KR); KIM, Ki Il, Yongin-si Gyeonggi-do 446-586 (KR); CHO, Joon Young, Suwon-si Gyeonggi-do 443-470 (KR); HAN, Jin Kyu, Seoul 156-772 (KR)
(74) Representative: Grünecker Patent- und Rechtsanwälte PartG mbB
(86) International application number: PCT/KR2011/003183
(87) International publication number: WO 2011/136600

(56) References cited:
- KR-A- 20090 016 374
- KR-A- 20090 016 386
- KR-A- 20090 083 834
- KR-A- 20100 005 649
- US-A1- 2009 006 925
- US-A1- 2009 052 405
- US-A1- 2009 262 695
- TEXAS INSTRUMENTS: "Possible Refinement on 8Tx Codebook Design", 3GPP DRAFT; R1-102104 TI 8TX MIMO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Beijing, china; 20100412, 6 April 2010 (2010-04-06), XP050419422, [retrieved on 2010-04-06]
- ZTE: "Discussion on unified framework for multi-granular feedback", 3GPP DRAFT; R1-101838_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Beijing, china; 20100412, 8 April 2010 (2010-04-08), XP050419710, [retrieved on 2010-04-08]
- SAMSUNG: "SU-MIMO PMI feedback and Compression", 3GPP DRAFT; R1-080693-PMI COMPRESSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sorrento, Italy; 20080206, 6 February 2008 (2008-02-06), XP050109188, [retrieved on 2008-02-06]

## Description

### BACKGROUND

### 1. Field

The following description relates to a multiple-input multiple-output (MIMO) communication system and, more particularly, to technology for sharing feedback information between a transmitter and a receiver in a MIMO communication system.

### 2. Description of Related Art

A multiple-input multiple-output (MIMO) communication system includes a transmitter and at least one receiver. For example, the MIMO communication system may include a base station and at least one terminal. In a downlink communication, the base station may operate as the transmitter, and each of the at least one terminal may operate as the receiver.

The transmitter or the receiver operating in the MIMO communication system may include a plurality of antennas, and may transmit and receive data using the plurality of antennas. A wireless channel may be formed between each transmit antenna of the transmitter and each receive antenna of the receiver. The transmitter and the receiver may share information associated with the wireless channel to improve the data rate.

In a closed-loop MIMO communication system, feedback information to be shared between the transmitter and the receiver may include a rank indicator indicating a preferred rank of the receiver, a precoding matrix indicator indicating a preferred precoding matrix, channel quality information indicating a quality of a wireless channel, and the like. The receiver may select one of a plurality of matrices or vectors included in a codebook using a predefined codebook. Accordingly, the receiver may feed back an index of the selected matrix or vector as the precoding matrix indicator.

US 2009/0052405 A1 refers to a method of transmitting feedback data in a multiple antenna system comprising receiving a request message of feedback data on a downlink channel, the request message comprising uplink scheduling information, selecting a set of M (M≧1) subbands within a plurality of subbands, generating the feedback data, the feedback data comprising a frequency selective PMI (preceding matrix indicator), a frequency flat PMI, a best band CQI (channel quality indicator) and a whole band CQI, and transmitting the feedback data on a uplink channel allocated to the uplink scheduling information.

US 2009/0262695 A1 refers to a rank and PMI in download control signaling for uplink single-user MIMO, (UL SU-MIMO). A method of operating a user equipment device includes extracting at least one rank indicator (RI) from an uplink grant, and adapting a transmission rank in response to said RI. At least two transmit antennas are configured to transmit according to said transmission rank. The publication of TEXAS INSTRUMENTS: "Possible Refinement on 8Tx Codebook Design", 3GPP DRAFT, vol. RAN WG1, 8 April 2010 refers to a design of 8Tx Codebook for Rel-10 downlink, DL, MIMO. To ensure design flexibility, the second (short-term) Codebook is made dependent upon the choice of the first precoding matrix. Two difference designs are referred to, one is suitable for 8Tx ULA and the other one for pairs of dual polarized antennas. The two designs can be combined into a single codebook construction.

The publication of ZTE: "Discussion on unified framework for multi-granular feedback", 3GPP DRAFT, vol. RAN WG1, 8 April 2010 refers to an enhancement of feedback accuracy. A precoder for a subband is composed of two matrixes, wherein the precoder structure is applied to all Tx antenna array configurations. Each of the two matrixes belong to a separate codebook, wherein the codebooks are known (or synchronized) at both the eNodeB and UE, and codebooks may or may not change over time and/or difference subbands. Two codebook indices together determine the precoder, and one of the two matrixes targets wideband and/or long-term channel properties, wherein the other matrix targets frequency selective and/or short-term channel properties.

### SUMMARY

It is the object of the present invention to provide an improved receiver and transmitter and corresponding communication methods.

This object is solved by the subject matter of the independent claims.

Preferred embodiments are defined by the dependent claims.

### BRIEF DESCRIPTION OF THE DRAWINGS

FIG. 1 is a diagram illustrating an example of a multi-user multiple input multiple output (MIMO) communication system.
FIG. 2 is a diagram illustrating an example of a communication method of a transmitter and a receiver, where the transmitter and receiver share a rank indicator, a precoding matrix indicator, and channel quality information.
FIG. 3 is a diagram illustrating an example of a transmitter and a receiver that share a first precoding matrix indicator, a second precoding matrix indictor, and channel quality information.
FIG. 4 is a diagram illustrating an example of a transmitter and a receiver that share a first precoding matrix indicator, a second precoding matrix indicator, channel quality information, and differential information.
FIG. 5 is a diagram illustrating an example of a communication apparatus.

Throughout the drawings and the detailed description, unless otherwise described, the same drawing reference numerals should be understood to refer to the same elements, features, and structures. The relative size and depiction of these elements may be exaggerated for clarity, illustration, and convenience.

### DETAILED DESCRIPTION

The invention is defined by the appended claims

The following detailed description is provided to assist the reader in gaining a comprehensive understanding of the methods, apparatuses, and/or systems described herein. Accordingly, various changes, modifications, and methods, apparatuses, and/or systems described herein may be suggested to those of ordinary skill in the art. Also, description of well-known functions and constructions may be omitted for increased clarity and conciseness.

Hereinafter, certain examples will be described in detail with reference to the accompanying drawings.

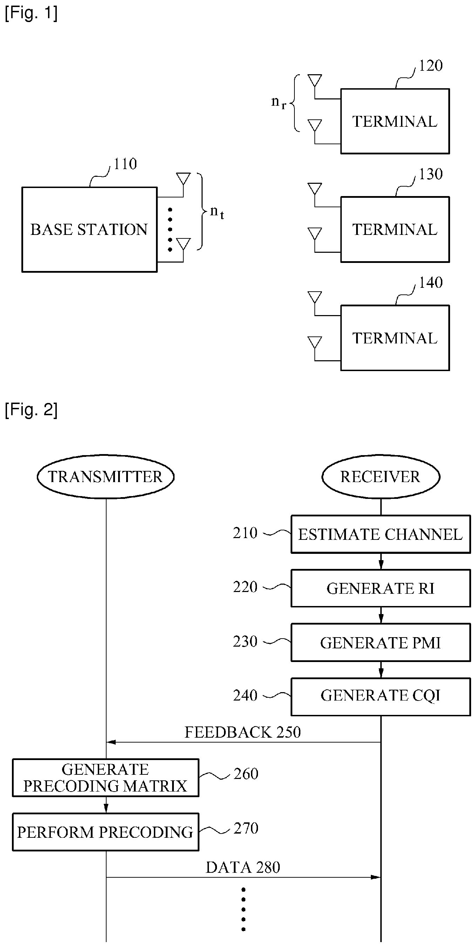

FIG. 1 illustrates an example of a multi-user multiple input multiple output (MIMO) communication system.

Referring to FIG. 1, the multi-user MIMO communication system may include a base station 110 and a plurality of terminals 120, 130, and 140. In a downlink communication, the base station may operate as a transmitter, and each of the terminals 120, 130, and 140 may operate as a receiver. In an uplink communication, the base station 110 may operate as the receiver, and each of the terminals 120, 130, and 140 may operate as the transmitter.

Hereinafter, examples will be described with respect to the base station 110 and the plurality of terminals 120, 130, and 140 operating in downlink communication. The examples may also be applicable to uplink communication.

The base station 110 may have a plurality of antennas, for example, two antennas, four antennas, eight antennas, and the like, may precode data streams to transmit data in the downlink. The base station 110 may verify information associated with channels formed between antennas of the base station 110 and antennas of each of the terminals 120, 130, and 140. For example, since the base station 110 and the terminals 120, 130, and 140 may share information associated with the channels, the terminals 120, 130, and 140 may feed back information associated with the channels to the base station 110.

Information associated with the channels may include a precoding matrix indicator, channel quality information, and the like. The same codebook including a predetermined number of matrices or vectors may be stored in the base station 110 and each of the terminals 120, 130, and 140. Each of the terminals 120, 130, and 140 may select a single matrix or vector from the codebook and generate the precoding matrix indicator accordingly. For example, an index of the selected single matrix or vector may be the precoding matrix indicator. The channel quality indicator may include information associated with strengths of channels, information associated with interference or noise affecting the channels, and the like.

The codebook may have a variety of sizes, for example, two bits, three bits, four bits, five bits, six bits, and the like. For example, a four-bit codebook may include 2⁴ = 16 vectors or matrices. Since a vector is a matrix having only a single column, the term 'matrix' should be understood to include the concept of the 'vector'.

Hereinafter, a method of sharing the precoding matrix indicator, the channel quality information, the rank indicator, and the like between the base station 110 and the terminals 120, 130, and 140 will be described with reference to various examples.

According to certain examples, two different codebooks C₁ and C₂ may be used. For example, the two codebooks C₁ and C₂ may be stored in each of the terminals 120, 130, and 140. In this example, each of the terminals 120, 130, and 140 may select a preferred precoding matrix W₁ from the codebook C₁, and may select a preferred precoding matrix W₂ from another codebook C₂. An index of W₁ and an index of W₂ may each correspond to precoding matrix indicators. Here, W₁ corresponds to an element of C₁ and W₂ corresponds to an element of C₂.

When a plurality of subbands is present in a frequency domain, a precoding matrix W with respect to a single subband substantially used by the base station 110 may correspond to a function of W₁ and W₂. As an example, W₁ may be associated with a wideband channel property or a long term channel property, and W₂ may be associated with a frequency-selective channel property or a short term channel property.

Channel quality information (CQI), a precoding matrix indicator (PMI), a rank indicator (RI), and the like may be transmitted and received via one of a physical uplink shared channel (PUSCH) and a physical uplink control channel (PUCCH).

### Aperiodic CQI/PMI/RI reporting using PUSCH

A terminal may feed back channel quality information, a precoding matrix indicator, and a rank indicator via a PUSCH. A variety of reporting modes may be used by the terminal, such as the examples shown in Table 1.

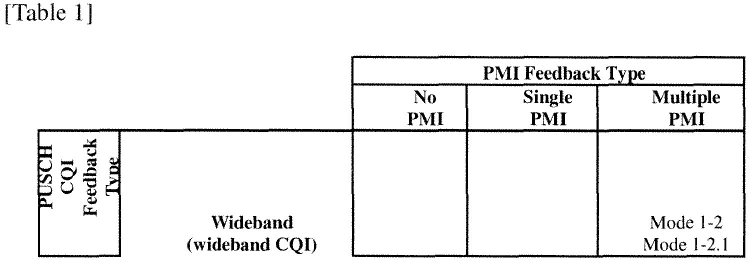

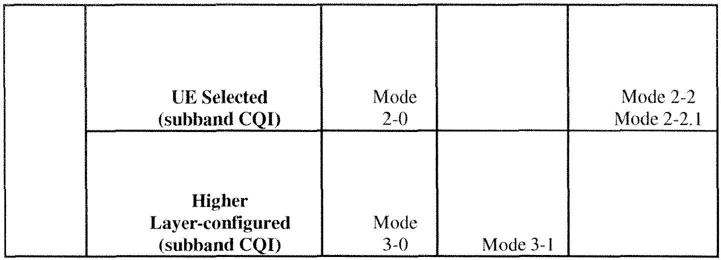

Reporting modes to be applied may vary depending on transmission modes. For example, when seven transmission modes 1, 2, 3, 4, 5, 6, and 7 are present, reporting modes applied to each of the transmission modes 1, 2, 3, 4, 5, 6, and 7 may be expressed as shown below.
Transmission mode 1 : Reporting modes 2-0, 3-0
Transmission mode 2 : Reporting modes 2-0, 3-0
Transmission mode 3 : Reporting modes 2-0, 3-0
Transmission mode 4 : Reporting modes 1-2, 2-2, 3-1
Transmission mode 5 : Reporting mode 3-1
Transmission mode 6 : Reporting modes 1-2, 2-2, 3-1
Transmission mode 7 : Reporting modes 2-0, 3-0

In addition to the aforementioned transmission modes 1, 2, 3, 4, 5, 6, and 7, a transmission mode 8 may be included to support reporting modes 1-2, 2-2, and 3-1 when a terminal accompanies PMI and RI reporting, and to support reporting modes 2-0 and 3-0 when the terminal does not accompany PMI and RI reporting.

Furthermore, a transmission mode 9 may be included. The transmission mode 9 may support at least one of the reporting modes shown in Table 1. In the transmission mode 9, the reporting modes recited in Table 1 may be used even when a number of transmit antennas is a predetermined number, for example, 2, 4, 8, and the like.

In the transmission mode 8 and the transmission mode 9, when the terminal accompanies PMI and RI reporting, reporting modes 1-2, 2-2, 3-1, 1-2.1, and 2-2.1 may be used. The modes may correspond to revised versions of reporting modes 1-2, 2-2, and 3-1, and may be applicable to an example where four transmit antennas are present, and to an example where eight transmit antennas are present. If the terminal does not accompany PMI and RI reporting, reporting modes 2-0 and 3-0 may be used.

The reporting modes, for example, reporting modes 1-2.1, 2-2.1, and 3-1.1, may have the following implementation:
Every time a wideband matrix indicator is applied to reduce feedback overhead or to report an appropriate precoding matrix with respect to an assignment of a large resource block, a precoding matrix indicator of W₁ may be generated. Every time a wideband matrix indicator having a relatively high accuracy is applied, an additional precoding matrix indicator of W₂ may be generated in a wideband scheme.

Every time a subband matrix indicator is applied, an additional precoding matrix indicator of W₂ may be generated.

According to reporting modes, a single subband precoding matrix indicator may be determined in a set of a plurality of subbands or in an individual subband. CQI may be determined based on a recommended precoding matrix W. The recommended precoding matrix W may correspond to a function of W₁ and W₂. When W₂ is reported with respect to all subbands, or when W₂ is reported with respect to a set of subbands, wideband CQI may be determined based on W. As another examle, the wideband CQI may be determined based on W that is the function of W₁ and W₂. Subband CQI may be determined in a single subband, or may be determined in a subset of a set of the plurality of subbands. The subband CQI may be determined in the subbands based on W, that is, a function of W₁ and W₂.

### 1. Wideband feedback

(1) Reporting mode 1-2:
   When transmitting only in a subband, with respect to each subband, a precoding matrix indicator of a first precoding matrix W₁ may be generated from a first codebook C₁.
   A terminal may feed back one wideband CQI per codeword. The corresponding wideband CQI may be determined when transmitting in a set of subbands if a corresponding precoding matrix W is applied in each subband.
   The terminal may feed back a selected precoding matrix indicator with respect to each subband. Further, a size of each subband may be determined according to various methods known in the art or specifically designed for the examples described herein.
   With respect to transmission mode 8 or transmission mode 9, the precoding matrix indicator and CQI may be determined based on a reported rank indicator. The first codebook C₁ and a second codebook C₂ may correspond to subsets of the same codebook C.
(2) Reporting mode 1-2.1:
   When transmitting in a set of subbands, a first precoding matrix indicator with respect to a set of subbands of a first precoding matrix W₁ may be generated from a first codebook C₁.

When transmitting only in a selected subband, with respect to each subband, a second precoding matrix indicator of a second precoding matrix W₂ may be generated from a second codebook C₂. In particular, transmission may be performed based on W, that is, a function of W₁ and W₂.

The terminal may report one wideband CQI per codeword. The corresponding wideband CQI may be determined when transmitting in a set of subbands if a corresponding precoding matrix W is applied in each subband. Further, the terminal may report a second precoding matrix index with respect to each subband.

In reporting mode 1-2.1, a precoding matrix indicator and CQI may be determined based on a reported rank indicator, and a size of a subband may be determined according to various methods known in the art or specifically designed for the examples described herein.

### 2. Subband feedback in upper layer

(1) Reporting mode 3-1:
   When transmitting in a set of subbands, a first precoding matrix indicator of a single first precoding matrix W₁ may be generated from a first codebook C₁. When transmitting in the set of the subbands, a second precoding matrix indicator of a single second precoding matrix W₂ may be generated from a second codebook C₂.
      - A terminal may report one subband CQI per codeword, with respect to each subband. The corresponding subband CQI may be determined when transmitting in a corresponding subband if W (that is, a function of W₁ and W₂) is applied in all subbands.
   The terminal may report one wideband CQI per codeword. The corresponding wideband CQI may be determined when transmitting in the set of subbands if W (that is, the function of W₁ and W₂) is applied in all of the subbands.
   With respect to transmission mode 8 and transmission mode 9, a precoding matrix indicator and CQI may be determined based on a reported rank indicator.
(2) Information associated with a difference, that is, differential information between CQI with respect to a set of a plurality of subbands and subband CQI with respect to each codeword, may be encoded using two bits.
(3) A size of a subband may be determined according to various methods known in the art or specifically designed for the examples described herein.

### 3. UE-selected subband feedback

(1) Reporting mode 2-2:
   When transmitting in a set of subbands, a first precoding matrix indicator of a single first precoding matrix W₁ may be generated from a first codebook C₁.
   A terminal may report one subband CQI per codeword, with respect to each subband. The corresponding subband CQI may be determined when transmitting in the set of subbands if W (that is, a function of W₁ and W₂) is applied in all of the subbands.
   The terminal may report the first precoding matrix indicator of the single first precoding matrix W₁ with respect to the set of subbands. The terminal may perform a joint selection of a first precoding matrix selected from a first codebook and a subset of M preferred subbands having a size k within the set of subbands. The first precoding matrix may correspond to a precoding matrix used for transmission in M selected subbands.
   The terminal may report one CQI based on transmission in M preferred subbands and the same single precoding matrix in each of M subbands. The terminal may also report the first precoding matrix indicator of the selected single first precoding matrix with respect to M selected subbands.
   With respect to transmission mode 8 and transmission mode 9, a precoding matrix indicator and CQI may be determined based on a reported rank indicator.
(2) Reporting mode 2-2.1:
   When transmitting in a set of subbands, a first precoding matrix indicator of a single first precoding matrix W₁ may be generated from a first codebook C₁.

A terminal may report one wideband CQI per codeword. The corresponding wideband CQI may be determined when transmitting in the set of subbands if the single first precoding matrix W₁ is applied in all subbands.

The terminal may report the first precoding matrix indicator of the single first precoding matrix W₁ with respect to the set of subbands. The terminal may perform a joint selection of a second precoding matrix W₂ selected from a second codebook and a subset of M preferred subbands having a size k within the set of subbands. The precoding matrix W may correspond to a function of W₁ and W₂, and may also correspond to a precoding matrix used for transmission in M selected subbands.

When transmitting only in M selected subbands and if the same single precoding matrix W is used in each of M subbands, the terminal may report one wideband CQI. The terminal may also report a single second precoding matrix indicator with respect to M subbands.
- With respect to transmission mode 8 and transmission mode 9, a precoding matrix indicator and CQI may be determined based on a reported rank indicator.

With respect to the UE selected subband feedback modes, the terminal may report information regarding M selected subbands.

Differential information, between CQI with respect to M selected subbands for each codeword and wideband CQI, may be encoded using two bits. An indicator indicating positions of M subbands may be encoded using L bits.

### Periodic CQI/PMI/RI reporting using PUCCH

A terminal may feed back differential information, for example, differential CQI, a precoding matrix indicator, and a rank indicator via a PUCCH. A variety of reporting modes may be used by the terminal, such as the examples shown in Table 2.

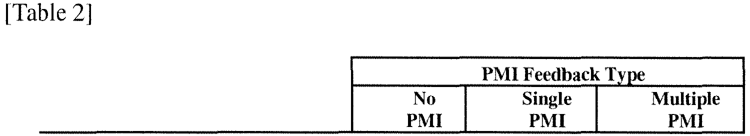

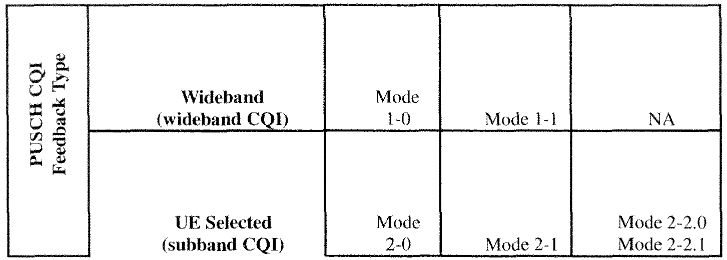

Reporting modes 1-0, 1-1, 2-0, and 2-1 disclosed in Table 2 are well described in 3^{rd} Generation Partnership Project (3GPP) Long Term Evolution (LTE) Rel. 8 TS 36.213. New reporting modes may be proposed as reporting modes 2-2.0 and 2-2.1, which are further described herein.

Reporting modes to be applied may vary depending on transmission modes. For example, when seven transmission modes 1, 2, 3, 4, 5, 6, and 7 are present, reporting modes applied to each of the transmission modes 1, 2, 3, 4, 5, 6, and 7 may be expressed as shown below.
Transmission mode 1: Reporting modes 1-0, 2-0
Transmission mode 2: Reporting modes 1-0, 2-0
Transmission mode 3: Reporting modes 1-0, 2-0
Transmission mode 4: Reporting modes 1-1, 2-1
Transmission mode 5: Reporting modes 1-1, 2-1
Transmission mode 6: Reporting modes 1-1, 2-1
Transmission mode 7: Reporting modes 1-0, 2-0

In addition to the aforementioned transmission modes 1, 2, 3, 4, 5, 6, and 7, transmission mode 8 may be included to support reporting modes 1-1 and 2-1 when a terminal accompanies PMI and RI reporting, and to support reporting modes 1-0 and 2-0 when the terminal does not accompany PMI and RI reporting.

Furthermore, a transmission mode 9 may be included. The transmission mode 9 may support at least one of the reporting modes shown in Table 2. In the transmission mode 9, the reporting modes recited in Table 2 may be used even when a number of transmit antennas is a predetermined number, for example, 2, 4, 8, and the like.

The reporting modes may be categorized based on criteria such as i) 'non-subband report/subband report' and ii) 'W₁ and W₂ reported in different subframes/ W₁ and W₂ reported in the same subframe'. An additional category may be provided by employing W₂ as wideband information or subband information. When W₂ is used as the wideband information, W₂ may be expressed as W_{2_W}, When W₂ is used as the subband information, W₂ may be expressed as W_{2_S}. In addition, A ∥ B indicates that information A and information B are reported in different subbands.

As described above, new reporting modes may be proposed as reporting modes 2-2.0 and 2-2.1.

### 1) Reporting mode RI, W₁ ∥ W_{2_W}, CQI_w

A rank indicator and a precoding matrix indicator of W₁ may be reported in the same subframe. The rank indicator and the precoding matrix indicator of W₁ may be jointly or separately encoded. W₁ may be selected from a first codebook C₁ or a subset of the first codebook C₁.

When a subset with respect to a second codebook includes only a single element, one-to-one mapping between W₁ and W_{2_W} may be established. Accordingly, a precoding matrix indicator of W_{2_W} may not be explicitly signaled.

Wideband CQI_w may be determined if a precoding matrix is a function of W₁ and W_{2_W}. A precoding matrix indicator of W_{2_W} and wideband CQI_w may be jointly encoded and reported in the same subframe.

Since W_{2_W} is present in the second codebook C₂ or in the subset of the second codebook C₂, feedback accuracy may increase. In particular, when a PUCCH power control is applied, and when an energy constraint is applied, error propagation may be mitigated.

An indicator corresponding to a precoding matrix selected from the first codebook may be referred to as the first precoding matrix indicator, and an indicator corresponding to a precoding matrix selected from the second codebook may be referred to as the second precoding matrix indicator. The precoding matrix selected from the first codebook may be expressed as W₁, and the precoding matrix selected from the second codebook may be expressed as W_{2_W} or W_{2_S}.

### 2) Reporting mode RI ∥ W₁ ∥ W_{2_W}, CQI_w

A rank indicator and a precoding matrix indicator of W₁ may be reported in different subframes. W₁ may be selected from a first codebook C₁ or a subset of the first codebook C₁.

W_{2_W} may correspond to W₂ selected from the whole band, and W_{2_W} may be selected from a second codebook or from a subset of the second codebook.

When the subset with respect to the second codebook includes only a single element, one-to-one mapping between W₁ and W_{2_W} may be established. Accordingly, a precoding matrix indicator of W_{2_W} may not be explicitly signaled.

Wideband CQI_w may be determined if a precoding matrix is a function of W₁ and W_{2_W}. A precoding matrix indicator of W_{2_W} and wideband CQI_w may be jointly encoded and reported in the same subframe.

The 'rank indicator', the 'precoding matrix indicator of W₁', and the 'precoding matrix indicator of W_{2_W} and CQI_w' may be reported in three different subframes.

Since W_{2_W} is present in the second codebook C₂ or in the subset of the second codebook C₂, feedback accuracy may increase.

### 3) Reporting mode RI ∥ W₁,W_{2_W} ∥ CQI_w

A rank indicator and a precoding matrix indicator of W₁ may be reported in different subframes. W₁ may be selected from a first codebook C₁ or a subset of the first codebook C₁.

W_{2_W} may correspond to W₂ selected from the whole band, and W_{2_W} may be selected from a second codebook or from a subset of the second codebook. The precoding matrix indicator of W₁ and a precoding matrix indicator of W_{2_W} may be jointly encoded and reported in the same subframe.

When the subset with respect to the second codebook includes only a single element, one-to-one mapping between W₁ and W_{2_W} may be established. Accordingly, the precoding matrix indicator of W_{2_W} may not be explicitly signaled.

Wideband CQI_w may be determined if a precoding matrix is a function of W₁ and W_{2_W}.

The 'rank indicator', the 'precoding matrix indicator of W₁ and the precoding matrix indicator of W_{2_W}', and 'CQI_w' may be reported in three different subframes.

### 4) Reporting mode RI ∥ W₁,W_{2_W}, CQI_w

A rank indicator and a precoding matrix indicator of W₁ may be reported in different subframes. W₁ may be selected from a first codebook C₁ or a subset of the first codebook C₁.

W_{2_W} may be selected from the whole band, and W_{2_W} may be selected from a second codebook or from a subset of the second codebook. The precoding matrix indicator of W₁, the precoding matrix indicator of W_{2_W}, and CQI_w may be jointly encoded and reported in the same subframe.

When the subset with respect to the second codebook includes only a single element, one-to-one mapping between W₁ and W_{2_W} may be established. Accordingly, the precoding matrix indicator of W_{2_W} may not be explicitly signaled.

Wideband CQI_w may be determined if a precoding matrix is a function of W₁ and W_{2_W}.

The 'rank indicator' and the 'precoding matrix indicator of W₁, the precoding matrix indicator of W_{2_W}, and CQI_w' may be reported in two different subframes.

### 5) Reporting mode RI,W₁,W_{2_W}∥ CQI_w

A rank indicator, a precoding matrix indicator of W₁, and a precoding matrix indicator of W_{2_W} may be jointly encoded and reported in the same subframe. W₁ may be selected from a first codebook C₁ or a subset of the first codebook C₁.

W_{2_W} may correspond to W₂ selected from the whole band, and W_{2_W} may be selected from a second codebook or from a subset of the second codebook.

When the subset with respect to the second codebook includes only a single element, one-to-one mapping between W₁ and W_{2_W} may be established. Accordingly, the precoding matrix indicator of W_{2_W} may not be explicitly signaled.

Wideband CQI_w may be determined if a precoding matrix is a function of W₁ and W_{2_W}.

The 'rank indicator, the precoding matrix indicator of W₁, and the precoding matrix indicator of W_{2_W}', and 'CQI_w' may be reported in two different subframes.

### 6) Reporting mode RI,W₁ ∥ W_{2_W},CQI_w ∥ CQI_s

A rank indicator and a precoding matrix indicator of W₁ may be reported in the same subframe, and may be jointly or individually be encoded. W₁ may be selected from a first codebook C₁ or a subset of the first codebook C₁.

W_{2_W} may correspond to W₂ selected from the whole band, and W_{2_W} may be selected from a second codebook or a subset of the second codebook.

When the subset with respect to the second codebook includes only a single element, one-to-one mapping between W₁ and W_{2_W} may be established. Accordingly, a precoding matrix indicator of W_{2_W} may not be explicitly signaled.

Wideband CQI_w may be determined if a precoding matrix is a function of W₁ and W_{2_W}. A precoding matrix indicator of W_{2_W} and wideband CQI_w may be jointly encoded and reported in the same subframe.

CQI_s may refer to subband CQI, and CQI_s may be obtained from a single subband. As an example, CQI_s may be selected from a bandwidth portion. CQI_s may be determined if a precoding matrix is a function of W₁ and W_{2_W} in a subband.

The 'rank indicator and the precoding matrix indicator of W₁', the 'precoding matrix indicator of W_{2_W} and CQI_w', and 'CQI_s' may be reported in three different subframes.

### 7) Reporting mode RI ∥ W₁ ∥ W_{2_W},CQI_w ∥ CQI_s

A rank indicator and a precoding matrix indicator of W₁ may be reported in the same subframe. W₁ may be selected from a first codebook C₁ or a subset of the first codebook C₁.

W_{2_W} may correspond to W₂ selected from the whole band, and W_{2_W} may be selected from a second codebook or a subset of the second codebook.

When the subset with respect to the second codebook includes only a single element, one-to-one mapping between W₁ and W_{2_W} may be established. Accordingly, a precoding matrix indicator of W_{2_W} may not be explicitly signaled.

Wideband CQI_w may be determined if a precoding matrix is a function of W₁ and W_{2_W}. The precoding matrix indicator of W_{2_W} and wideband CQI_w may be jointly encoded and reported in the same subframe.

CQI_s may refer to subband CQI, and CQI_s may be obtained from a single subband. As an example, CQI_s may selected from a bandwidth portion. CQI_s may be determined if a precoding matrix is a function of W₁ and W_{2_W} in a subband.

The 'rank indicator', the 'precoding matrix indicator of W₁', the 'precoding matrix indicator of W_{2_W} and CQI_w', and 'CQI_s' may be reported in four different subframes.

### 8) Reporting mode RI ∥ W₁,CQI_w ∥ W_{2_}_{W},CQI_s

A rank indicator and a precoding matrix indicator of W₁ may be reported in different subframes. W₁ may be selected from a first codebook C₁ or a subset of the first codebook C₁.

W_{2_W} may correspond to W₂ selected from the whole band, and W_{2_W} may be selected from a second codebook or a subset of the second codebook.

When the subset with respect to the second codebook includes only a single element, one-to-one mapping between W₁ and W_{2_W} may be established. Accordingly, a precoding matrix indicator of W_{2_W} may not be explicitly signaled.

Wideband CQI_w may be determined if a precoding matrix is a function of only W₁. That is, when W₁ is selected, W₂ is predetermined. Accordingly, W₂ may be predefined as, for example, an identity matrix. The precoding matrix indicator of W₁ and wideband CQI_w may be jointly encoded and reported in the same subframe.

CQI_s may refer to subband CQI, and CQI_s may be obtained from a single subband. As an example, CQI_s may be selected from a bandwidth portion. CQI_s may be determined if a precoding matrix is a function of W₁ and W_{2_W} in a subband. The precoding matrix indicator of W_{2_W} and wideband CQI_s may be jointly encoded and reported in the same subframe.

The 'rank indicator', the 'precoding matrix indicator of W₁ and CQI_w ', and the 'precoding matrix indicator of W_{2_W}, CQI_s' may be reported in three different subframes.

### 9) Reporting mode RI,W₁ ∥ W_{2_W},CQI_w ∥ W_{2_S},CQI_s

A rank indicator and a precoding matrix indicator of W₁ may be reported in the same subframe. The rank indicator and the precoding matrix indicator of W₁ may be jointly or separately encoded. W₁ may be selected from a first codebook C₁ or a subset of the first codebook C₁.

W_{2_W} may correspond to W₂ selected from the whole band, and W_{2_W} may be selected from a second codebook or a subset of the second codebook.

When the subset with respect to the second codebook includes only a single element, one-to-one mapping between W₁ and W_{2_W} may be established. Accordingly, the precoding matrix indicator of W_{2_W} may not be explicitly signaled.

W_{2_S} may correspond to W₂ selected from a single subband, and W_{2_S} may be selected from the second codebook or the subset of the second codebook.

Wideband CQI_w may be determined if a precoding matrix is a function of W₁ and W_{2_W}. A precoding matrix indicator of W_{2_W} and wideband CQI_w may be jointly encoded and reported in the same subframe.

CQI_s may refer to subband CQI, and CQI_s may be obtained from a single subband. As an example, CQI_s may be selected from a bandwidth portion. CQI_s may be determined if a precoding matrix is a function of W₁ and W_{2_S} in a subband. The precoding matrix indicator of W_{2_S} and CQI_s may be jointly encoded and reported in the same subframe.

The 'rank indicator and the precoding matrix indicator of W₁', the 'precoding matrix indicator of W_{2_W} and CQI_w', and the 'precoding matrix indicator of W_{2_S} and CQI_s' may be reported in three different subframes.

### 10) Reporting mode RI ∥ W₁ ∥ W_{2_W},CQI_w ∥ W_{2_S},CQI_s

A rank indicator and a precoding matrix indicator of W₁ may be reported in different subframes. W₁ may be selected from a first codebook C₁ or a subset of the first codebook C₁.

W_{2_W} may correspond to W₂ selected from the whole band, and W_{2_W} may be selected from a second codebook or a subset of the second codebook.

When the subset with respect to the second codebook includes only a single element, one-to-one mapping between W₁ and W_{2_W} may be established. Accordingly, a precoding matrix indicator of W_{2_W} may not be explicitly signaled.

W_{2_S} may correspond to W₂ selected from the whole band, and W_{2_S} may be selected from a second codebook or a subset of the second codebook.

Wideband CQI_w may be determined if a precoding matrix is a function of W₁ and W_{2_W}. A precoding matrix of W_{2_W} and wideband CQI_w may be jointly encoded and reported in the same subframe.

CQI_s may refer to subband CQI, and CQI_s may be obtained from a single subband. As an example, CQI_s may be selected from a bandwidth portion. CQI_s may be determined if a precoding matrix is a function of W₁ and W_{2_S} in a subband. A precoding matrix of W_{2_S} and wideband CQI_s may be jointly encoded and reported in the same subframe.

The 'rank indicator', the 'precoding matrix indicator of W₁', the 'precoding matrix indicator of W_{2_W} and CQI_w', and the 'precoding matrix indicator of W_{2_S} and CQI_s' may be reported in four different subframes.

### 11) Reporting mode RI ∥ W₁,W_{2_W},CQI_w ∥ W_{2_S},CQI-s

A rank indicator and a precoding matrix indicator of W₁ may be reported in different subframes. W₁ may be selected from a first codebook C₁ or a subset of the first codebook C₁.

W_{2_W} may correspond to W₂ selected from the whole band, and W_{2_W} may be selected from a second codebook or a subset of the second codebook. The precoding matrix indicator of W₁, a precoding matrix indicator of W_{2_W}, and wideband CQI_w may be jointly encoded and reported in the same subframe.

When the subset with respect to the second codebook includes only a single element, one-to-one mapping between W₁ and W_{2_W} may be established. Accordingly, a precoding matrix indicator of W_{2_W} may not be explicitly signaled.

W_{2_S} may correspond to W₂ selected from the whole band, and W_{2_S} may be selected from a second codebook or a subset of the second codebook.

Wideband CQI_w may be determined if a precoding matrix is a function of W₁ and W_{2_W}.

CQI_s may refer to subband CQI, and CQI_s may be obtained from a single subband. As an example, CQI_s may be selected from a bandwidth portion. CQI_s may be determined if a precoding matrix is a function of W₁ and W_{2_S} in a subband. The precoding matrix indicator of W_{2_S} and CQI_s may be jointly encoded and reported in the same subframe.

The 'rank indicator', the 'precoding matrix indicator of W₁, the precoding matrix indicator of W_{2_W}, and CQI_w', and the 'precoding matrix indicator of W_{2_S} and CQI_s' may be reported in three different subframes.

### 12) Reporting mode RI ∥ W₁,CQI_w ∥ W_{2_S},CQI-s

A rank indicator and a precoding matrix indicator of W₁ may be reported in different subframes. W₁ may be selected from a first codebook C₁ or a subset of the first codebook C₁.

W_{2_W} may correspond to W₂ selected from the whole band, and W_{2_W} may be selected from a second codebook or a subset of the second codebook. The precoding matrix indicator of W₁ and CQI_w may be jointly encoded and reported in the same subframe.

When the subset with respect to the second codebook includes only a single element, one-to-one mapping between W₁ and W_{2_W} may be established. Accordingly, a precoding matrix indicator of W_{2_W} may not be explicitly signaled.

W_{2_S} may correspond to W₂ selected from a single subband, and W_{2_S} may be selected from the second codebook or the subset of the second codebook.

Wideband CQI_w may be determined if a precoding matrix is a function of only W₁. That is, when W₁ is selected, W₂ is predetermined. Accordingly, W₂ may be predefined as, for example, an identity matrix. The precoding matrix indicator of W₁ and wideband CQI_w may be jointly encoded and reported in the same subframe.

CQI_s may refer to subband CQI, and CQI_s may be obtained from a single subband. As an example, CQI_s may be selected from a bandwidth portion. CQI_s may be determined if a precoding matrix is a function of W₁ and W_{2_W} in a subband. The precoding matrix indicator of W_{2_S} and CQI_s may be jointly encoded and reported in the same subframe.

The 'rank indicator', the 'precoding matrix indicator of W₁ and CQI_w', and the 'precoding matrix indicator of W_{2_S} and CQI_s' may be reported in three different subframes.

### 13) Reporting mode RI ∥ W₁,W_{2_W} ∥ CQI_w ∥ CQI_s

A rank indicator and a precoding matrix indicator of W₁ may be reported in different subframes. W₁ may be selected from a first codebook C₁ or a subset of the first codebook C₁.

W_{2_W} may correspond to W₂ selected from the whole band, and W_{2_W} may be selected from a second codebook or a subset of the second codebook. The precoding matrix indicator of W₁ and a precoding matrix indicator of W_{2_W} may be reported in the same subframe.

When the subset with respect to the second codebook includes only a single element, one-to-one mapping between W₁ and W_{2_W} may be established. Accordingly, a precoding matrix indicator of W_{2_W} may not be explicitly signaled.

Wideband CQI_w may be determined if a precoding matrix is a function of W₁ and W_{2_W}.

CQI_s may refer to subband CQI, and CQI_s may be obtained from a single subband. As an example, CQI_s may be selected from a bandwidth portion. CQI_s may be determined if a precoding matrix is a function of W₁ and W_{2_W} in a subband.

The 'rank indicator', the 'precoding matrix indicator of W₁ and the precoding matrix indicator of W_{2_W}', 'CQI_w', and 'CQI_s' may be reported in four different subframes.

### 14) Reporting mode RI ∥ W₁,W_{2_W},CQI-w ∥ CQI_s

A rank indicator and a precoding matrix indicator of W₁ may be reported in different subframes. W₁ may be selected from a codebook C₁ or a subset of the first codebook.

W_{2_W} may correspond to W₂ selected from the whole band, and W_{2_W} may be selected from a second codebook or a subset of the second codebook. The precoding matrix indicator of W₁, a precoding matrix indicator of W_{2_W}, and CQI_w may be jointly encoded and reported in the same subframe.

When the subset with respect to the second codebook includes only a single element, one-to-one mapping between W₁ and W_{2_W} may be established. Accordingly, a precoding matrix indicator of W_{2_W} may not be explicitly signaled.

Wideband CQI_w may be determined if a precoding matrix is a function of W₁ and W_{2_W}.

CQI_s may refer to subband CQI, and CQI_s may be obtained from a single subband. As an example, CQI_s may be selected from a bandwidth portion. CQI_s may be determined if a precoding matrix is a function of W₁ and W_{2_S} in a subband.

The 'rank indicator', the 'precoding matrix indicator of W₁, the precoding matrix indicator of W_{2_W}, and CQI_w', and 'CQI_s' may be reported in three different subframes.

### 15) Reporting mode RI,W₁,W₂_{_W} ∥ CQI_w ∥ CQI_s

A rank indicator, a precoding matrix indicator of W₁, and a precoding matrix indicator W_{2_W} may be jointly encoded and reported in the same subframe. W₁ may be selected from a first codebook C₁ or a subset of the first codebook C₁.

W_{2_W} may correspond to W₂ selected from the whole band, and W_{2_W} may be selected from a second codebook or a subset of the second codebook.

When the subset with respect to the second codebook includes only a single element, one-to-one mapping between W₁ and W_{2_W} may be established. Accordingly, the precoding matrix indicator of W_{2_W} may not be explicitly signaled.

Wideband CQI_w may be determined if a precoding matrix is a function of W₁ and W_{2_W}.

CQI_s may refer to subband CQI, and CQI_s may be obtained from a single subband. As an example, CQI_s may be selected from a bandwidth portion. CQI_s may be determined if a precoding matrix is a function of W₁ and W_{2_S} in a subband.

The 'rank indicator, the precoding matrix indicator of W₁, and the precoding matrix indicator of W_{2_W}', 'CQI_w', and 'CQI_s' may be reported in three different subframes.

### Reporting Types

Five CQI/PMI and RI reporting types, having distinct periods and offsets, may be supported for each PUCCH reporting mode, as shown in Table 3.

Type 1 report supports CQI feedback with respect to UE selected subbands.

Type 2 report supports wideband CQI and PMI feedback.

Type 3 report supports RI feedback.

Type 4 report supports wideband CQI.

Type 5 report supports CQI and PMI with respect to UE selected subbands. Further, Type 5 enables reporting of subband or wideband different MPI and subband CQI. In this example, two options may be provided: Type 5.0, including Subband (differential) PMI and subband CQI, and Type 5.1, including Wideband (differential) PMI and subband CQI.

**[Table 3]**

| **PUCCH Report Type** | **Reported** | **Mode State** | **PUCCH Reporting Modes** | | | | |
|---|---|---|---|---|---|---|---|
| | | | | | | | **Mode 2-2.0** |
| | | | **Mode 1-1 (bits/BP)** | **Mode 2-1 (bits/BP)** | **Mode 1-0 (bits/BP)** | **Mode 2-0 (bits/BP)** | **Mode 2-2.1 (bits/BP)** |
| 1 | Subband CQI | RI = 1 | NA | 4+L | NA | 4+L | NA |
| | | RI > 1 | NA | 7+L | NA | 4+L | NA |
| 2 | Wideband CQI/PMI | 2 TX Antennas RI = I | 6 | 6 | NA | NA | 6 |
| | | 4 TX Antennas RI = 1 | 8 | 8 | NA | NA | 8 |
| | | 8 TX Antennas RI = 1 | 8 | 8 | NA | NA | 8 |
| | | 2 TX Antennas RI > 1 | 8 | 8 | NA | NA | 8 |
| | | 4 TX Antennas RI > 1 | 11 | 11 | NA | NA | 11 |
| | | 8 TX Antennas RI > 1 | 11 | 11 | NA | NA | 11 |
| 3 | RI | 2-layer spatial multiplexing | 1 | 1 | 1 | 1 | 1 |
| | | 4-layer spatial multiplexing | 2 | 2 | 2 | 2 | 2 |
| | | 8-layer spatial multiplexing | 3 | 3 | 3 | 3 | 3 |
| 4 | Wideband CQI | RI = 1 or RI>1 | NA | NA 4 | | 4 | NA |
| 5.0 | Subband CQI/subband PMI | RI = 1 | NA | NA | NA | NA | 4+L+2 |
| | | RI > 1 | NA | NA | NA | NA | 7+L+2 |
| 5.1 | Subband CQI/wideband PMI | RI = 1 | NA | NA | NA | NA | 4+L+2 |
| | | RI > 1 | NA | NA | NA | NA | 7+L+2 |

Table 3 may be applied to a two-bit subband PMI, as shown in Table 4, Table 5, and Table 6.

**[Table 4]**

| | **Reported** | **Mode State** | **PUCCH Reporting Modes** | | | | |
|---|---|---|---|---|---|---|---|
| | | | | | | | **Mode 2-2.0** |
| **PUCCH Report Type** | | | **Mode 1-1 (bits/BP)** | **Mode 2-1 (bits/BP)** | **Mode 1-0 (bits/BP)** | **Mode 2-0 (bits/BP)** | **Mode 2-2.1 (bits/BP)** |
| 1 | Subband CQI | RI = 1 | NA | 4+L | NA | 4+L | NA |
| | | RI > 1 | NA | 7+L | NA | 4+L | NA |
| 2 | Wideband CQI/PMI | 2 TX Antennas RI = 1 | 6 | 6 | NA | NA | 6 |
| | | 4 TX Antennas RI = 1 | 8 | 8 | NA | NA | 8 |
| | | 8 TX Antennas RI = 1 | 8 | 8 | NA | NA | 8 |
| | | 2 TX Antennas RI > 1 | 8 | 8 | NA | NA | 8 |
| | | 4 TX Antennas RI > 1 | 11 | 11 | NA | NA | 11 |
| | | 8 TX Antennas RI > 1 | 11 | 11 | NA | NA | 11 |
| | | 2-layer spatial multiplexing, | 1 | | 1 | 1 | 1 |
| 3 | RI | 4-layer spatial multiplexing 8-layer spatial multiplexing | 2 3 | 2 3 | 2 3 | 2 3 | 2 3 |
| 4 | Wideband CQI | RI = 1 or RI>1 | NA | NA | 4 | 4 | NA |
| | 5.0: | 2 TX Antennas RI = 1 | NA | NA | NA | NA | NA |
| | Subband CQI/subb | 4 TX Antennas RI = 1 | NA | NA | NA | NA | 4+L+2 |
| 5.0 | and PMI 5.1: | 8 TX Antennas RI = 1 | NA | NA | NA | NA | 4+L+2 |
| 5.1 | Subband CQI/wide | 2 TX Antennas RI > 1 | NA | NA | NA | NA | NA |
| | band PMI | 4 TX Antennas RI > 1 | NA | NA | NA | NA | 7+L+2 |
| | | 8 TX Antennas RI > 1 | NA | NA | NA | NA | 7+L+2 |

**[Table 5]**

| | | | **PUCCH Reporting Modes** | | | | |
|---|---|---|---|---|---|---|---|
| | **Reported** | **Mode State** | | | | | **Mode 2-2.0** |
| **PUCCH Report Type** | | | **Mode 1-1 (bits/BP)** | **Mode 2-1 (bits/BP)** | **Mode 1-0 (bits/BP)** | **Mode 2-0 (bits/BP)** | **Mode 2-2.1 (bits/BP)** |
| 1 | Subband CQI | RI = 1 | NA | 4+L | NA | 4+L | NA |
| | | RI > 1 | NA | 7+L | NA | 4+L | NA |
| 2 | Wideband CQI/PMI | 2 TX Antennas RI = 1 | 6 | 6 | NA | NA | 6 |
| | | 4 TX Antennas RI = I | 8 | 8 | NA | NA | 8 |
| | | 8 TX Antennas RI = 1 | 8 | 8 | NA | NA | 8 |
| | | 2 TX Antennas RI > 1 | 8 | 8 | NA | NA | 8 |
| | | 4 TX Antennas RI > 1 | 11 | 11 | NA | NA | II |
| | | 8 TX Antennas RI > 1 | 11 | 11 | NA | NA | 11 |
| 3 | RI | 2-layer spatial multiplexing | 1 | 1 | 1 | 1 | 1 |
| | | 4-layer spatial multiplexing | 2 | 2 | 2 | 2 | 2 |
| | | 8-layer spatial multiplexing | 3 | 3 | 3 | 3 | 3 |
| 4 | Wideband CQI | RI = 1 or RI>1 | NA | NA | 4 | 4 | NA |
| 5.0 5.1 | 5.0: Subband CQI/subb and PMI 5.1: Subband CQI/wide band PMI | 2 TX Antennas RI = 1 | NA | NA | NA | NA | NA |
| | | 4 TX Antennas RI = 1 | NA | NA | NA | NA | 4+L+2 |
| | | 8 TX Antennas RI = 1 | NA | NA | NA | NA | 4+L+2 |
| | | 2 TX Antennas RI = 2 | NA | NA | NA | NA | NA |
| | | 4 TX Antennas RI = 2 | NA | NA | NA | NA | 7+L+2 |
| | | 8 TX Antennas RI = 2 | NA | NA | NA | NA | 7+L+2 |
| | | 2 TX Antennas RI > 2 | NA | NA | NA | NA | NA |
| | | 4 TX Antennas RI > 2 | NA | NA | NA | NA | 7+L |
| | | 8 TX Antennas RI > 2 | NA | NA | NA | NA | 7+L |

**[Table 6]**

| | **Reported** | **Mode State** | **PUCCH Reporting Modes** | | | | |
|---|---|---|---|---|---|---|---|
| | | | | | | | **Mode 2-2.0** |
| **PUCCH Report Type** | | | **Mode 1-1 (bits/BP)** | **Mode 2-1 (bits/BP)** | **Mode 1-0 (bits/BP)** | **Mode 2-0 (bits/BP)** | **Mode 2-2.1 (bits/BP)** |
| 1 | Subband CQI | RI = 1 | NA | 4+L | NA | 4+L | NA |
| | | RI > 1 | NA | 7+L | NA | 4+L | NA |
| 2 | Wideband CQI/PMI | 2 TX Antennas RI = 1 | 6 | 6 | NA | NA | 6 |
| | | 4 TX Antennas RI = 1 | 8 | 8 | NA | NA | 8 |
| | | 8 TX Antennas RI = 1 | 8 | 8 | NA | NA | 8 |
| | | 2 TX Antennas RI > 1 | 8 | 8 | NA | NA | 8 |
| | | 4 TX Antennas RI > 1 | 11 | 11 | NA | NA | 11 |
| | | 8 TX Antennas RI > 1 | 11 | 11 | NA | NA | 11 |
| 3 | RI | 2-layer spatial multiplexing | 1 | 1 | I | 1 | 1 |
| | | 4-layer spatial multiplexing | 2 | 2 | 2 | 2 | 2 |
| | | 8-layer spatial multiplexing | 3 | 3 | 3 | 3 | 3 |
| 4 | Wideband CQI | RI = 1 or RI>1 | NA | NA | 4 | 4 | NA |
| 5.0 5.1 | 5.0: Subband CQI/subband PMI 5.1: Subband CQI/wideband PMI | 2 TX Antennas RI = 1 | NA | NA | NA | NA | NA |
| | | 4 TX Antennas RI = 1 | NA | NA | NA | NA | 2+L+X |
| | | 8 TX Antennas RI = 1 | NA | NA | NA | NA | 2+L+X |
| | | 2 TX Antennas RI = 2 | NA | NA | NA | NA | NA |
| | | 4 TX Antennas RI = 2 | NA | NA | NA | NA | 4+L+X |
| | | 8 TX Antennas RI = 2 | NA | NA | NA | NA | 4+L+X |
| | | 2 TX Antennas RI > 2 | NA | NA | NA | NA | NA |
| | | 4 TX Antennas RI > 2 | NA | NA | NA | NA | 7+L |
| | | 8 TX Antennas RI > 2 | NA | NA | NA | NA | 7+L |

Table 3 may be further applied to a Y-bit subband PMI, as shown in Table 7, Table 8, and Table 10.

**[Table 7]**

| | **Reported** | **Mode State** | **PUCCH Reporting Modes** | | | | |
|---|---|---|---|---|---|---|---|
| | | | | | | | **Mode 2-2.0** |
| **PUCCH Report Type** | | | **Mode 1-1 (bits/BP)** | **Mode 2-1 (bits/BP)** | **Mode 1-0 (bits/BP)** | **Mode 2-0 (bits/BP)** | **Mode 2-2.1 (bits/BP)** |
| 1 | Subband CQI | RI = 1 | NA | 4+L | NA | 4+L | NA |
| | | RI > 1 | NA | 7+L | NA | 4+L | NA |
| 2 | Wideband CQI/PMI | 2 TX Antennas RI = 1 | 6 | 6 | NA | NA | 6 |
| | | 4 TX Antennas RI = 1 | 8 | 8 | NA | NA | 8 |
| | | 8 TX Antennas RI = 1 | 8 | 8 | NA | NA | 8 |
| | | 2 TX Antennas RI > 1 | 8 | 8 | NA | NA | 8 |
| | | 4 TX Antennas RI > 1 | 11 | 11 | NA | NA | 11 |
| | | 8 TX Antennas RI > 1 | 11 | 11 | NA | NA | 11 |
| 3 | RI | 2-layer spatial multiplexing | 1 | 1 | 1 | I | I |
| | | 4-layer spatial multiplexing 8-layer spatial multiplexing | 2 3 | 2 3 | 2 3 | 2 3 | 2 3 |
| 4 | Wideband CQI | RI = 1 or RI>1 | NA | NA | 4 | 4 | NA |
| 5.0 | 5.0: Subband CQI/subb and PMI 5.1: | RI = 1 | NA | NA | NA | NA | 4+L+X |
| 5.1 | Subband CQI/wide band PMI | RI > 1 | NA | NA | NA | NA | 7+L+Y |

**[Table 8]**

| | | | **PUCCH Reporting Modes** | | | | |
|---|---|---|---|---|---|---|---|
| **PUCCH Report** | **Reported** | **Mode State** | **Mode** | **Mode** | **Mode** | **Mode** | **Mode** |
| **Type** | | | **1-1** | **2-1** | **1-0** | **2-0** | **2-2.0 Mode** |
| | | | **(bits/BP)** | **(bits/BP)** | **(bits/BP)** | **(bits/BP)** | **2-2.1 (bits/BP)** |
| 1 | Subband CQI | RI = 1 | NA | 4+L | NA | 4+L | NA |
| | | RI > 1 | NA | 7+L | NA | 4+L | NA |
| 2 | Wideband CQI/PM1 | 2 TX Antennas RI = 1 | 6 | 6 | NA | NA | 6 |
| | | 4 TX Antennas RI = 1 | 8 | 8 | NA | NA | 8 |
| | | 8 TX Antennas RI = 1 | 8 | 8 | NA | NA | 8 |
| | | 2 TX Antennas RI > 1 | 8 | 8 | NA | NA | 8 |
| | | 4 TX Antennas RI > 1 8 TX Antennas RI > 1 | 11 11 | 11 11 | NA NA | NA NA | 11 11 |
| | | 2-layer spatial multiplexing | 1 | 1 | 1 | 1 | I |
| 3 | RI | 4-layer spatial multiplexing | 2 | 2 | 2 | 2 | 2 |
| | | 8-layer spatial multiplexing | 3 | 3 | 3 | 3 | 3 |
| 4 | Wideband CQI | RI = 1 or RI>1 | NA | NA | 4 | 4 | NA |
| 5.0 5.1 | 5.0: Subband CQI/subband PMI 5.1: Subband CQI/wideband PMI | 2 TX Antennas RI = 1 | NA | NA | NA | NA | NA |
| | | 4 TX Antennas RI = 1 | NA | NA | NA | NA | 4+L+X |
| | | 8 TX Antennas RI = 1 | NA | NA | NA | NA | 4+L+X |
| | | 2 TX Antennas RI > 1 | NA | NA | NA | NA | NA |
| | | 4 TX Antennas RI > 1 | NA | NA | NA | NA | 7+L+Y (=7+L+2) |
| | | 8 TX Antennas RI > 1 | NA | NA | NA | NA | 7+L+Y (=7+L+2) |

**[Table 9]**

| **PUCCH Report Type** | **Reported** | **Mode State** | **PUCCH Reporting Modes** | | | | |
|---|---|---|---|---|---|---|---|
| | | | **Mode 1-1 (bits/BP)** | **Mode 2-1 (bits/BP)** | **Mode 1-0 (bits/BP)** | **Mode 2-0 (bits/BP)** | **Mode 2-2.0 Mode 2-2.1 (bits/BP)** |
| 1 | Subband | RI = 1 | NA | 4+L | NA | 4+L | NA |
| | CQI | RI > I | NA | 7+L | NA | 4+L | NA |
| 2 | Wideband CQI/PMI | 2 TX Antennas RI = 1 | 6 | 6 | NA | NA | 6 |
| | | 4 TX Antennas RI = I | 8 | 8 | NA | NA | 8 |
| | | 8 TX Antennas RI = 1 | 8 | 8 | NA | NA | 8 |
| | | 2 TX Antennas RI > I | 8 | 8 | NA | NA | 8 |
| | | 4 TX Antennas RI > 1 | 11 | 11 | NA | NA | 11 |
| | | 8 TX Antennas RI > 1 | 11 | 11 | NA | NA | 11 |
| 3 | RI | 2-layer spatial multiplexing | 1 | 1 | 1 | 1 | 1 |
| | | 4-layer spatial multiplexing | 2 | 2 | 2 | 2 | 2 |
| | | 8-layer spatial multiplexing | 3 | 3 | 3 | 3 | 3 |
| 4 | Wideband CQI | RI= 1 or RI>1 | NA | NA | 4 | 4 | NA |
| | 5.0: Subband CQI/subband PMI 5.1:Subband CQI/wideband PMI | 2 TX Antennas RI = 1 | NA | NA | NA | NA | NA |
| | | 4 TX Antennas RI = 1 | NA | NA | NA | NA | 4+L+X |
| | | 8 TX Antennas RI = 1 | NA | NA | NA | NA | 4+L+X |
| | | 2 TX Antennas RI = 2 | NA | NA | NA | NA | NA |
| 5.0 5.1 | | 4 TX Antennas RI = 2 | NA | NA | NA | NA | 7+L+Y (=7+L+2) |
| | | 8 TX Antennas RI = 2 | NA | NA | NA | NA | 7+L+Y (=7+L+2) |
| | | 2 TX Antennas RI > 2 | NA | NA | NA | NA | NA |
| | | 4 TX Antennas RI > 2 | NA | NA | NA | NA | 7+L |
| | | 8 TX Antennas RI > 2 | NA | NA | NA | NA | 7+L |

**[Table 10]**

| | **Reported** | **Mode State** | **PUCCH Reporting Modes** | | | | |
|---|---|---|---|---|---|---|---|
| | | | | | | | **Mode 2-2.0** |
| **PUCCH Report Type** | | | **Mode 1-1 (bits/BP)** | **Mode 2-1 (bits/BP)** | **Mode 1-0 (bits/BP)** | **Mode 2-0 (bits/BP)** | **Mode 2-2.1 (bits/BP)** |
| 1 | Subband CQI | RI = 1 | NA | 4+L | NA | 4+L | NA |
| | | RI > 1 | NA | 7+L | NA | 4+L | NA |
| 2 | Wideband CQI/PMI | 2 TX Antennas RI = 1 | 6 | 6 | NA | NA | 6 |
| | | 4 TX Antennas RI = 1 | 8 | 8 | NA | NA | 8 |
| | | 8 TX Antennas RI = 1 | 8 | 8 | NA | NA | 8 |
| | | 2 TX Antennas RI > 1 | 8 | 8 | NA | NA | 8 |
| | | 4 TX Antennas RI > 1 8 TX Antennas RI > 1 | 11 11 | 11 11 | NA NA | NA NA | 11 11 |
| 3 | RI | 2-layer spatial multiplexing | 1 | 1 | 1 | 1 | 1 |
| | | 4-layer spatial multiplexing 8-layer spatial multiplexing | 2 3 | 2 3 | 2 3 | 2 3 | 2 3 |
| 4 | Wideband CQI | RI = 1 or RI>1 | NA | NA | 4 | 4 | NA |
| 5.0 5.1 | 5.0: Subband CQI/subband PMI 5.1: Subband CQI/wideband PMI | 2 TX Antennas RI = 1 | NA | NA | NA | NA | NA |
| | | 4 TX Antennas RI = 1 | NA | NA | NA | NA | 2+L+X |
| | | 8 TX Antennas RI = 1 | NA | NA | NA | NA | 2+L+X |
| | | 2 TX Antennas RI = 2 | NA | NA | NA | NA | NA |
| | | 4 TX Antennas RI = 2 | NA | NA | NA | NA | 4+L+Y |
| | | 8 TX Antennas RI = 2 | NA | NA | NA | NA | 4+L+Y |
| | | 2 TX Antennas RI > 2 | NA | NA | NA | NA | NA |
| | | 4 TX Antennas RI > 2 | NA | NA | NA | NA | 7+L |
| | | 8 TX Antennas RI > 2 | NA | NA | NA | NA | 7+L |

FIG. 2 illustrates an example of a communication method of a transmitter and a receiver, where the transmitter and receiver share a rank indicator, a precoding matrix indicator, and channel quality information.

Referring to FIG. 2, the receiver may correspond to a terminal in a downlink communication, and accordingly correspond to a base station in an uplink communication. The transmitter may correspond to the base station in a downlink communication, and accordingly correspond to the terminal in an uplink communication.

At 210, the receiver estimates a channel from the transmitter to the receiver. The receiver may estimate the channel using a known signal transmitted from the transmitter. The transmitter may include a plurality of transmit antennas, for example, two transmit antennas, four transmit antennas, eight transmit antennas, sixteen transmit antennas, and the like. The receiver includes at least one receive antenna.

At 220, the receiver generates a rank indicator (RI) indicating a number of preferred layers, for example, ranks. At 230, the receiver generates a precoding matrix indicator (PMI) indicating a preferred precoding matrix, using a predefined codebook based on the rank indicator. According to certain examples, at least two precoding matrix indicators may be generated based on at least two predefined codebooks. In this example, a final precoding matrix may be determined as an inner product between at least two precoding matrices selected from each of the at least two codebooks.

At 240, the receiver generates CQI based on the rank indicator and the precoding matrix indicator.

At 250, the receiver feeds back the rank indicator, the precoding matrix indicator, and CQI via a PUSCH or a PUCCH.

At 260, the transmitter generates a substantially optimal precoding matrix based on the fed back rank indicator, the precoding matrix indicator, and CQI. At 270, the transmitter precodes data streams. At 280, precoded data is transmitted to the receiver, for example, via the plurality of transmit antennas.

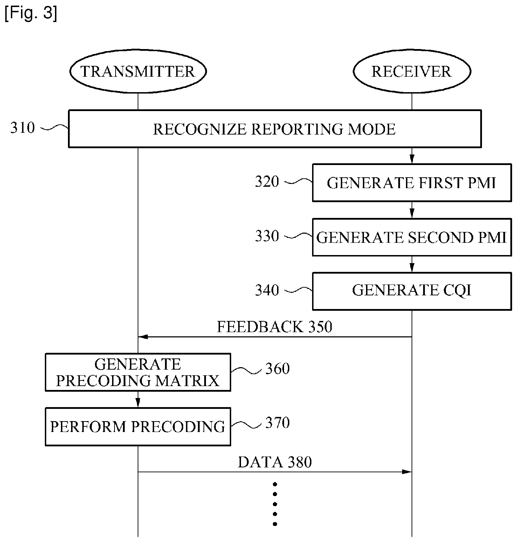

FIG. 3 illustrates an example of a transmitter and a receiver that share a first precoding matrix indicator, a second precoding matrix indictor, and channel quality information. Reporting mode 1-2.1 using a PUSCH and two reporting modes using a PUCCH are further described with reference to FIG. 3.

A communication method of a transmitter and a receiver operating according to reporting mode 1-2.1 using the PUSCH are described with reference to FIG. 3.

### 1. Reporting mode 1-2.1 using PUSCH

At 310, the transmitter and the receiver operate according to reporting mode 1-2.1 using the PUSCH.

At 320, the receiver generates a first precoding matrix indicator by selecting a first precoding matrix W₁ from a first codebook C₁. When a plurality of subbands is present, the receiver may generate, from the first codebook C₁, a precoding matrix indicator with respect to a set of subbands, if the transmitter performs a transmission in the set of subbands.

The first codebook C₁ may be different from a second codebook C₂, and the first codebook C₁ and the second codebook C₂ may be subsets of the same full codebook.

At 330, the receiver generates a second precoding matrix indicator by selecting a second precoding matrix W₂ from the second codebook C₂. In this example, if transmission occurs only in a selected subband with respect to each subband, the receiver may generate the second precoding matrix indicator of the second precoding matrix W₂ from the second codebook C₂.

At 340, the receiver determines one wideband CQI per codeword when transmitting in the set of subbands if a corresponding precoding matrix W is applied in each subband.

At 350, the receiver may feed back the first precoding matrix indicator, the second precoding matrix indicator, and the wideband CQI via the PUSCH.

The precoding matrix indicator and the CQI may be determined based on a reported rank indicator and a size of a subband may be determined according to various methods known in the art or specifically designed for the examples described herein. A threshold rank indicator RI_{threshold} may have various values, for example, 2.

At 360, when the first precoding matrix indicator, the second precoding matrix indicator, and the wideband CQI are fed back to the transmitter, the transmitter generates a substantially optimal precoding matrix using the first codebook C₁ and the second codebook C₂.

At 370, the transmitter precodes at least one data stream using the generated precoding matrix. At 380, the precoded at least one data stream may be transmitted via a plurality of transmit antennas.

### 2. Reporting mode RI || W₁||W_{2_w},CQI_w using PUCCH

At 310, the receiver and the transmitter recognize a reporting mode with respect to feedback information. With respect to the present example, it may be assumed that a rank indicator indicating a preferred rank of the receiver is generated.

At 320, the receiver generates, from a first codebook C₁, a first precoding matrix indicator with respect to a set of a plurality of subbands or a predetermined subband among the plurality of subbands. A first precoding matrix corresponding to the first precoding matrix indicator may be referred to as W₁.

At 330, the receiver generates, from a second codebook C₂, a second precoding matrix indicator with respect to the set of the plurality of subbands. A second precoding matrix corresponding to the second precoding matrix indicator may be referred to as W_{2_w}. W_{2_w} may correspond to W₂ selected from the whole band, and be selected from the second codebook or a subset of the second codebook.

When the subset with respect to the second codebook includes only a single element, one-to-one mapping between W₁ and W_{2_w} may be established. In such case, a precoding matrix indicator of W_{2_w} may not be explicitly signaled.

At 340, the receiver ma determines wideband CQI_w if the precoding matrix is a function of W₁ and W_{2_W}. In this example, the receiver may determine CQI_w with respect to the set of the plurality of subbands using the first precoding matrix indicator and the second precoding matrix indicator.

The precoding matrix indicator of W_{2_W} and the wideband CQI_w may be jointly encoded.

At 350, the receiver may transmit the rank indicator at a first reporting time and may transmit the first precoding matrix indicator at a second reporting time. The receiver may also feed back the second precoding matrix indicator with respect to the set of the plurality of subbands and CQI_w with respect to the set of the plurality of subbands at a third reporting time.

Each of the first reporting time, the second reporting time, and the third reporting time may correspond to a different subframe.

In particular, the receiver may transmit the rank indicator based on a first reporting period and may transmit the first precoding matrix indicator based on a second reporting period. The receiver may also feed back the second precoding matrix indicator with respect to the set of the plurality of subbands and CQI with respect to the set of the plurality of subbands based on a third reporting period.

As described above with respect to reporting mode 1-2.1 using PUSCH, operations 360 through 380 are performed by the transmitter.

### 3. Reporting mode RI || W₁ || W_{2_w},CQI_w || W2_s,CQI_s using PUCCH

At 310, the receiver and the transmitter recognize a reporting mode with respect to feedback information.

At 320, the receiver generates, from a first codebook C₁, a first precoding matrix indicator with respect to a set of a plurality of subbands or a predetermined subband among the plurality of subbands. A first precoding matrix corresponding to the first precoding matrix indicator may be referred to as W₁.

At 330, the receiver generates, from a second codebook C₂, a second precoding matrix indicator with respect to the set of the plurality of subbands. A second precoding matrix corresponding to the second precoding matrix indicator may be referred to as W_{2_W}. W_{2_w} may correspond to W₂ selected from the whole band, and be selected from the second codebook or a subset of the second codebook.

When the subset with respect to the second codebook includes only a single element, one-to-one mapping between W₁ and W_{2_w} may be established. In such case, a precoding matrix indicator of W_{2_w} may not be explicitly signaled.

At 330, the receiver generates the second precoding matrix indicator with respect to the set of the plurality of subbands, and may also generate, from the second codebook C₂, a second precoding matrix indicator W_{2_S} with respect to each predetermined subband. For clarity, the second precoding matrix indicator W_{2_S} with respect to each predetermined subband is referred to in this example as a third precoding matrix indicator. Accordingly, at 330, the receiver may generate, from the second codebook C₂, W_{2_w} and W_{2_S}.

At 340, the receiver generates wideband CQI_w and subband CQI_s.

In this example, wideband CQI_w may be determined if the precoding matrix is a function of W₁ and W_{2_W}. CQI_s may refer to subband CQI and may be obtained from a single subband. As an example, CQI_s may be selected from a bandwidth portion. CQI_s may be determined if the precoding matrix is a function of W₁ and W_{2_S} in a subband.

At 350, the receiver feeds back, in four different subframes, the 'rank indicator', the 'first precoding matrix indicator of W1', the 'second precoding matrix indicator of W_{2_W} and CQI_w', and the 'third precoding matrix indicator of W_{2_S} and CQI_s'.

The four different subframes may correspond to first to fourth reporting points.

As described above with respect to reporting mode 1-2.1 using PUSCH, operations 360 through 380 are performed by the transmitter.

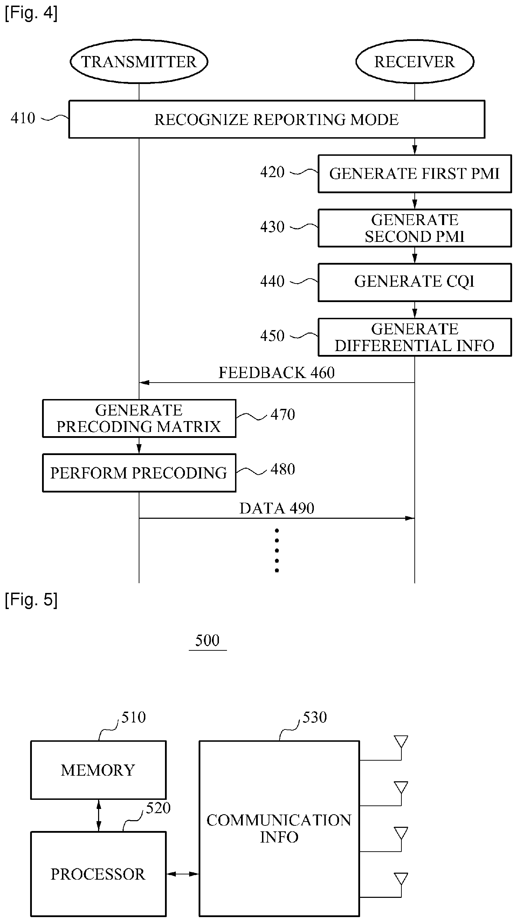

FIG. 4 illustrates an example of a transmitter and a receiver that share a first precoding matrix indicator, a second precoding matrix indicator, channel quality information, and differential information.

Here, reporting mode 3-1 using a PUSCH will be described with reference to FIG. 4.

At 410, the receiver and the transmitter recognize a reporting mode with respect to feedback information.

At 420, the receiver generates a first precoding matrix indicator by selecting a first precoding matrix W₁ from a first codebook C₁. When transmitting in a set of subbands, the first precoding matrix indicator of the single first precoding matrix W₁ may be generated from the first codebook C₁.

At 430, the receiver generates a second precoding matrix indicator by selecting a second precoding matrix W₂ from a second codebook C₂. When transmitting in the set of subbands, the first precoding matrix indicator of the single second precoding matrix W₂ may be generated from the second codebook C₂.

At 440, the receiver generates one subband CQI per codeword, and generates one wideband CQI per codeword with respect to each subband. In this example, the subband CQI may be determined when transmitting in the corresponding subband if W (that is, a function of W₁ and W₂) is applied in all of the subbands. Similarly, the wideband CQI may be determined when transmitting in the corresponding subband if W (that is, a function of W₁ and W₂) is applied in all of the subbands.

At 450, the receiver generates differential information associated with a difference between CQI associated with the set of the plurality of subbands and subband CQI associated with each codeword. The differential information may be encoded using single bit, two bits, three bits, and the like.

At 460, the receiver feeds back the first precoding matrix indicator, the second precoding matrix indicator, wideband CQI, and subband CQI. At least one of wideband CQI and subband CQI may be replaced with the differential information. All of the wideband CQI, the subband CQI, and the differential information may be fed back.

At 470, the transmitter generates a substantially optimal precoding matrix. At 480, the transmitter precodes at least one data stream using the generated precoding matrix. At 490, the precoded at least one data stream may be transmitted via a plurality of transmit antennas.

FIG. 5 illustrates an example of a communication apparatus 500. The communication apparatus 500 may be applicable to both a transmitter and a receiver.

Referring to FIG. 5, the communication apparatus 500 includes a memory 510, a processor 520, and a communication interface 530.

A first codebook and a second codebook, which are subsets of a full codebook, may be stored in the memory 510.

The processor 520 may generate a corresponding precoding matrix indicator from each of the first codebook and the second codebook, or may extract a corresponding precoding matrix corresponding to the corresponding precoding matrix indicator. For example, when the communication apparatus 500 is installed in or implemented at the receiver, the processor 520 may generate the corresponding precoding matrix from each of the first codebook and the second codebook. When the communication apparatus 500 is installed in or implemented at the transmitter, the processor 520 may extract the precoding matrix corresponding to the precoding matrix indicator generated from each of the first codebook and the second codebook. The processor 520 may also generate a precoding matrix to be finally applied, or may generate CQI. The aforementioned operations of the transmitter and the receiver may be generally performed by the processor 520.

The communication interface 530 may transmit or receive the corresponding matrix indicator generated from each of the first codebook and the second codebook.

The processes, functions, methods and/or software described above may be recorded, stored, or fixed in one or more computer-readable storage media that includes program instructions to be implemented by a computer to cause a processor to execute or perform the program instructions. The media may also include, alone or in combination with the program instructions, data files, data structures, and the like. The media and program instructions may be those specially designed and constructed, or they may be of the kind well-known and available to those having skill in the computer software arts. Examples of computer-readable storage media include magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules that are recorded, stored, or fixed in one or more computer-readable storage media, in order to perform the operations and methods described above, or vice versa. In addition, a computer-readable storage medium may be distributed among computer systems connected through a network and non-transitory computer-readable codes or program instructions may be stored and executed in a decentralized manner.

A number of examples have been described above. Nevertheless, it should be understood that various modifications may be made. For example, suitable results may be achieved if the described techniques are performed in a different order and/or if components in a described system, architecture, device, or circuit are combined in a different manner and/or replaced or supplemented by other components. Accordingly, other implementations are within the scope of the following claims.

## Claims

1. A communication method of a receiver, comprising:
generating (320, 330, 420, 430), based on a reporting mode, a first precoding matrix indicator from a first codebook C1 and a second precoding matrix indicator from a second codebook C2, wherein the reporting mode is determined among reporting modes comprising:
a first reporting mode, of a wideband feedback type, wherein in the first reporting mode, the first precoding matrix indicator is associated with a set of subbands and the second precoding matrix indicator is associated with a subband among the set of subbands;
generating channel quality information associated with the set of subbands, based on a precoding matrix that corresponds to each of the first precoding matrix indicator and the second precoding matrix indicator; and
transmitting (350, 460) feedback information to a transmitter, wherein the feedback information comprises the first precoding matrix indicator, the second precoding matrix indicator, and the channel quality information.

2. The communication method of claim 1, wherein the feedback information is transmitted via a physical uplink shared channel, PUSCH.

3. The communication method of claim 1, wherein the channel quality information generated based on a predetermined rank indicator or a rank indictor determined in the receiver.

4. A receiver, comprising: means for generating (320, 330, 420, 430), based on a reporting mode, a first precoding matrix indicator from a first codebook C1 and a second precoding matrix indicator from a second codebook C2, wherein the reporting mode is determined among reporting modes comprising:
a first reporting mode, of a wideband feedback type, wherein in the first reporting mode, the first precoding matrix indicator is associated with a set of subbands and the second precoding matrix indicator is associated with a subband among the set of subbands;
means for generating channel quality information associated with the set of subbands, based on a precoding matrix that corresponds to each of the first precoding matrix indicator and the second precoding matrix indicator; and
means for transmitting (350, 460) feedback information to a transmitter, wherein the feedback information comprises the first precoding matrix indicator, the second precoding matrix indicator, and the channel quality information.

5. The receiver of claim 4 further comprising means adapted to operate according to any one of claims 2 to 3.

## Patentansprüche

1. Kommunikationsverfahren eines Empfängers, umfassend:
Erzeugen (320, 330, 420, 430) eines ersten Vorcodierungsmatrix-Indikators aus einem ersten Codebuch C1 und eines zweiten Vorcodierungsmatrix-Indikators aus einem zweiten Codebuch C2 auf der Grundlage eines Meldemodus, wobei der Meldemodus unter Meldemodi bestimmt wird, die umfassen:
einen ersten Meldemodus eines Breitband-Rückmeldetyps, wobei in dem ersten Meldemodus der erste Vorcodierungsmatrixindikator einem Satz von Teilbändern zugeordnet ist und der zweite Vorcodierungsmatrixindikator einem Teilband aus dem Satz von Teilbändern zugeordnet ist;
Erzeugen von Kanalqualitätsinformationen, die dem Satz von Teilbändern zugeordnet sind, auf der Grundlage einer Vorcodierungsmatrix, die jeweils dem ersten Vorcodierungsmatrixindikator und dem zweiten Vorcodierungsmatrixindikator entspricht; und
Senden (350, 460) von Rückmeldeinformationen an einen Sender, wobei die Rückmeldeinformationen den ersten Vorcodierungsmatrixindikator, den zweiten Vorcodierungsmatrixindikator und die Kanalqualitätsinformationen umfassen.

2. Kommunikationsverfahren nach Anspruch 1, bei dem die Rückmeldeinformationen über einen gemeinsam genutzten physikalischen Uplink-Kanal PUSCH gesendet werden.

3. Kommunikationsverfahren nach Anspruch 1, bei dem die Kanalqualitätsinformationen auf der Grundlage eines vorbestimmten Rangindikators oder eines in dem Empfänger bestimmten Rangindikators erzeugt werden.

4. Empfänger, umfassend:
eine Einrichtung zum Erzeugen (320, 330, 420, 430) eines ersten Vorcodierungsmatrix-Indikators aus einem ersten Codebuch C1 und eines zweiten Vorcodierungsmatrix-Indikators aus einem zweiten Codebuch C2 auf der Grundlage eines Meldemodus, wobei der Meldemodus unter Meldemodi bestimmt wird, die umfassen:
einen ersten Meldemodus eines Breitband-Rückmeldetyps, wobei in dem ersten Meldemodus der erste Vorcodierungsmatrixindikator einem Satz von Teilbändern zugeordnet ist und der zweite Vorcodierungsmatrixindikator einem Teilband aus dem Satz von Teilbändern zugeordnet ist;
Eine Einrichtung zum Erzeugen von Kanalqualitätsinformationen, die dem Satz von Teilbändern zugeordnet sind, auf der Grundlage einer Vorcodierungsmatrix, die jeweils dem ersten Vorcodierungsmatrixindikator und dem zweiten Vorcodierungsmatrixindikator entspricht; und
eine Einrichtung zum Senden (350, 460) von Rückmeldeinformationen an einen Sender, wobei die Rückmeldeinformationen den ersten Vorcodierungsmatrixindikator, den zweiten Vorcodierungsmatrixindikator und die Kanalqualitätsinformationen umfassen.

5. Empfänger nach Anspruch 4, weiterhin umfassend eine Einrichtung, die für den Betrieb nach einem der Ansprüche 2 bis 3 eingerichtet ist.

## Revendications

1. Procédé de communication d'un récepteur, comprenant :
génération (320, 330, 420, 430), selon un mode de compte-rendu, d'un premier indicateur de matrice de précodage issu d'un premier livre-code C1 et d'un deuxième indicateur de matrice de précodage issu d'un deuxième livre-code C2, dans lequel le mode de compte-rendu est déterminé parmi des modes de compte-rendu comprenant :
un premier mode de compte-rendu, d'un type de retour d'information en large bande, dans lequel dans le premier mode de compte-rendu, le premier indicateur de matrice de précodage est associé à un ensemble de sous-bandes et le deuxième indicateur de matrice de précodage est associé à une sous-bande parmi l'ensemble de sous-bandes ;
génération d'informations de qualité de canal associées à l'ensemble de sous-bandes, selon une matrice de précodage qui correspond à chacun du premier indicateur de matrice de précodage et au deuxième indicateur de matrice de précodage ; et
transmission (350, 460) d'informations de retour d'information à un émetteur, dans lequel les informations de retour d'information comprennent le premier indicateur de matrice de précodage, le deuxième indicateur de matrice de précodage et les informations de qualité de canal.

2. Le procédé de communication de la revendication 1, dans lequel les informations de retour d'information sont transmises via un canal partagé de liaison montante physique, PUSCH (Physical Uplink Shared CHannel).

3. Le procédé de communication de la revendication 1, dans lequel les informations de qualité de canal générées selon un indicateur de rang prédéterminé ou un indicateur de rang déterminé dans le récepteur.

4. Récepteur comprenant :
un moyen de générer (320, 330, 420, 430), selon un mode de compte-rendu, un premier indicateur de matrice de précodage issu d'un premier livre-code Cl et un deuxième indicateur de matrice de précodage issu d'un deuxième livre-code C2, dans lequel le mode de compte-rendu est déterminé parmi des modes de compte-rendu comprenant :
un premier mode de compte-rendu, d'un type de retour d'information en large bande, dans lequel dans le premier mode de compte-rendu, le premier indicateur de matrice de précodage est associé à un ensemble de sous-bandes et le deuxième indicateur de matrice de précodage est associé à une sous-bande parmi l'ensemble de sous-bandes ;
un moyen de générer des informations de qualité de canal associées à l'ensemble de sous-bandes, selon une matrice de précodage qui correspond à chacun du premier indicateur de matrice de précodage et du deuxième indicateur de matrice de précodage ; et
un moyen de transmettre (350, 460) des informations de retour d'information à un émetteur, dans lequel les informations de retour d'information comprennent le premier indicateur de matrice de précodage, le deuxième indicateur de matrice de précodage et les informations de qualité de canal.

5. Le récepteur de la revendication 4 comprenant en outre un moyen adapté pour fonctionner selon l'une quelconque des revendications 2 à 3.
